# NOUVEAU FASCICULE DE BREVET EUROPEEN

(11) **EP 0 171 754 B2**
(45) Date de publication et mention de la décision concernant l'opposition: **20.04.1994**
(45) Mention de la délivrance du brevet: 12.10.1988
(21) Numéro de dépôt: 85109954.9
(22) Date de dépôt: 07.08.1985
(51) Int. Cl.: F16K 49/00, C21B 9/12, F16K 27/04

(54) **Vanne à vent chaud**
Heisswindschieber
Hot blast slide valve

(30) Priorité: 17.08.1984 LU 85513
(43) Date de publication de la demande: 19.02.1986
(73) Titulaire: SIDMAR S.A., B-9020 Gent (BE)
(72) Inventeur: De Langhe, Heli, B-9050 Evergem (BE)
(74) Mandataire: Vanderperre, Robert

(56) Documents cités:
- AT-B- 372 404
- DE-A- 2 411 756
- DE-A- 2 909 467
- DE-B- 1 285 825
- DE-B- 2 328 085
- DE-B- 2 364 915
- DE-C- 3 343 299

## Description

La présente invention concerne une vanne à vent chaud. De telles vannes sont utilisées dans les installations qui alimentent des fours qui fonctionnent à température élevée, notamment des hauts fourneaux, en vent chaud.

Les premières vannes à vent chaud, utilisées dans les installations de haut fourneau, étaient en fonte. Ensuite les vannes ont été réalisées en acier moulé avec des sièges en cuivre. Etant donné que leurs circuits d'eau ne permettaient pas de refroidissement préférentiel, ces vannes devaient être remplacées au bout de quelques semaines. Par la suite, les techniques modernes de soudage permettaient la fabrication de corps de vannes en acier avec des sièges en acier intégré qui avaient des durées de vie nettement plus importantes.

Les vannes modernes en acier soudé, telles que décrites par exemple dans les documents DE-B-2 328 085 et DE-B-2 364 915, présentent des corps de vanne revêtus d'une couche protectrice de matériau réfractaire. Ces vannes, qui fonctionnent de manière satisfaisante jusqu'à des températures de quelque 1.400°C, possèdent néanmoins les désavantages suivants:

On observe dans la construction mécano-soudée de la vanne de fortes tensions qui peuvent mener à des fissurations et à des fuites aux joints de la bride située entre le corps de la vanne et le chapeau. Les tensions sont causées par des gradients de température induits dand la tôlerie à l'intérieur du corps pendant la marche de l'installation. D'un autre côté une quantité non négligeable de chaleur est soustraite au vent chaud à cause de l'importante surface de refroidissement. Finalement la consommation d'énergie pour effectuer le refroidissement des sièges n'est plus en accord avec les efforts actuels de faire des économies dans tous les domaines possibles.

L'invention a comme but de remédier aux désavantages exposés plus haut et de proposer une vanne ayant des pertes calorifiques réduites et des déformations thermiques limitées.

Ce but est atteint à l'aide de la vanne selon l'invention, telle que caractérisée dans la revendication indépendante. Des variantes d'exécution préférentielles sont décrites dans les revendications dépendantes.

L'invention sera exposée ci-après plus en détail à l'aide de dessins qui en représentent deux formes d'exécution possible.
- La figure 1 montre de manière schématique un haut fourneau alimenté par des Cowpers.
- Les figures 2 et 3 montrent des vannes à air chaud illustrant l'état de la technique.
- Les figures 4 et 5 montrent des vannes à air chaud réalisées selon l'invention.

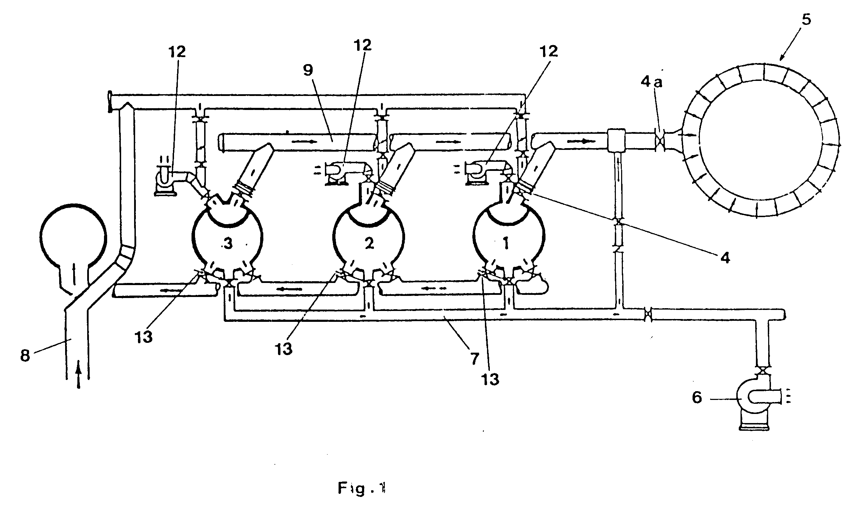

En figure 1 a été représenté un haut fourneau 5 alimenté par trois régénérateurs de vent ou Cowpers 1, 2, 3. Les Cowpers sont normalement chauffés par des brûleurs alimentés avec un mélange de gaz amené par l'intermédiaire de conduits 8 et d'air en provenance de soufflantes 12. Au moment où la température requise à l'intérieur du Cowper est atteinte, on arrête le chauffage. Ensuite on inverse la vanne des fumées et d'air 13 et on souffle à l'aide de la soufflante 6 du vent froid à travers le conduit 7 dans le Cowper chaud. Le vent, qui possède une température comprise entre 900° et 1300°C à la sortie du Cowper, sort par la vanne à vent chaud 4. Le vent est amené vers le haut fourneau 5 par le conduit à vent chaud 9 et une deuxième vanne à vent chaud 4a. On a plusieurs cowpers 1, 2, 3, par haut fourneau afin d'assurer une alimentation continue du haut fourneau en vent chaud.

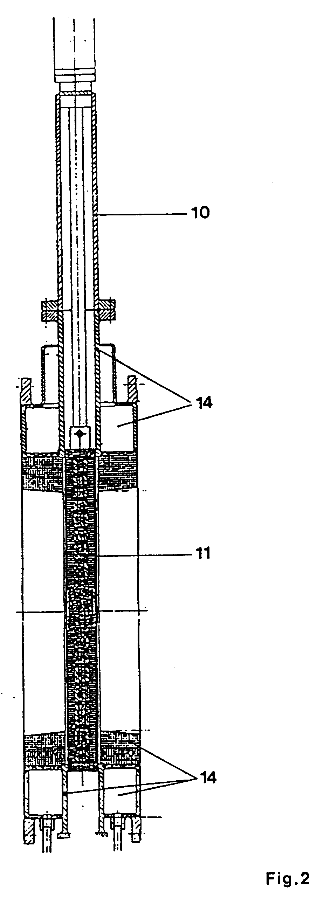

En figure 2 on distingue une coupe à travers une vanne connue en acier soudé, comportant notamment un corps 14, un chapeau 10, et un opercule 11. Le corps 14 et l'opercule 11 sont refroidis à l'eau. Il est possible de brancher le circuit de refroidissement du corps en série avec celui de l'opercule, maise on utilise habituellement deux circuits de refroidissement distincts, l'un pour le corps (débit approximatif: 50 m³/ heure), l'autre pour l'opercule (débit approximatif: 25 m³/heur). Notons que le circuit de refroidissement du corps comporte normalement deux parties dont chacune refroidit un des deux sièges.

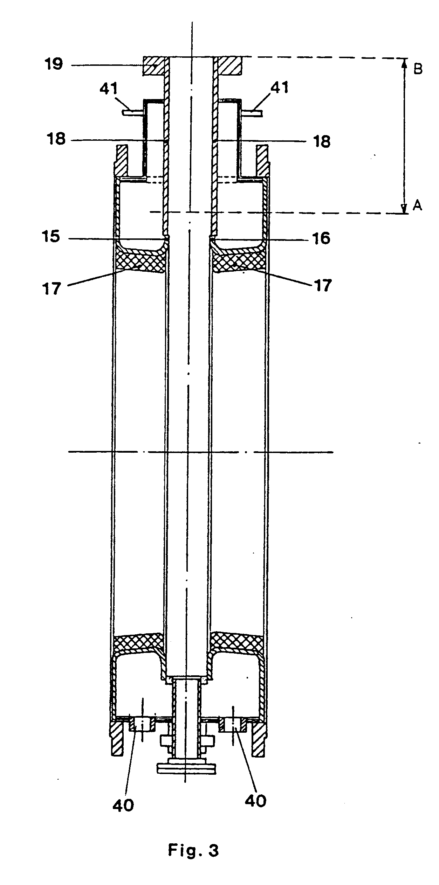

Sur la figure 3, on peut voir une vanne connue, de conception plus récente, dans laquelle les deux sièges en acier 15, 16 sont refroidis à l'eau. De plus le corps intérieur de la vanne est protégé par du matériau réfractaire et isolant 17. L'eau de refroidissement du corps entre dans la vanne par deux conduits 40 et ressort en haut près du chapeau par deux conduits 41.

Cette dernière exécution est, comme indiqué plus haut, le siège de déformations; les plus fortes tensions dans la tôlerie du corps se situent dans la partie supérieure du corps (zone A-B). Sous l'effet de ces tensions la bride rectangulaire 19, qui relie le corps de la vanne au chapeau, se déforme; ceci provoque des fissures dans la construction soudée et des fuites de vent chaud. L'origine des tensions se trouve mainfestement dans le gradient important de température dans les supports 18 et dans les sièges 15 et 16 pendant la marche de l'installation.

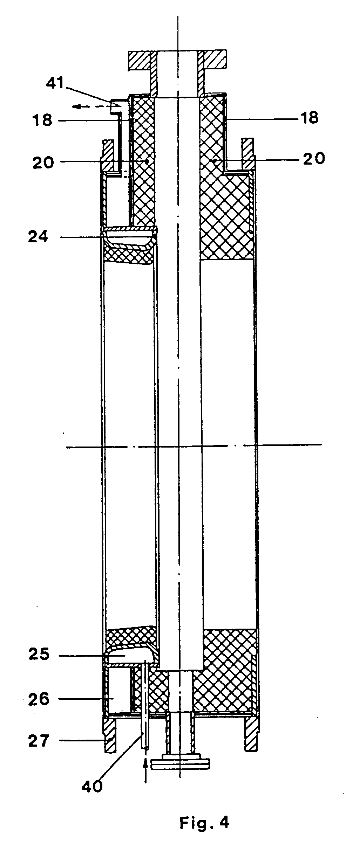

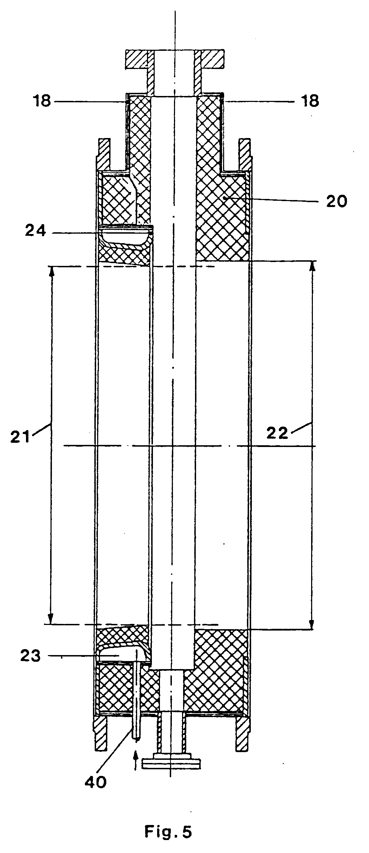

Selon l'invention on évite la déformation de la bride 19 et les gradients importants de température dans les supports 18: en déplaçant ces supports vers l'extérieur du corps on les protège du côté vent chaud avec un matériel réfractaire, p.ex. du béton réfractaire (voir figure 4); de plus pour diminuer les pertes de chaleur du vent chaud, on exécute le corps avec, un seul siège 24 (voir figures 4 et 5), étant de préférence amovible et remplaçable. Le deuxième siège est simplement remplacé par du matériau réfractaire 20.

La vanne à vent chaud travaille en effet dans les installations de chauffage (Cowpers) comme un clapet anti-retour. La différence de pression sur les deux faces de l'opercule en position fermée, résulte dans une force dirigée toujours dans le même sens. L'opercule de la vanne, en position fermée, est donc toujours appuyé contre le même siège c.à d. contre celui situé côté amont de la vanne. Il est par conséquent superflu de présenter au vent chaud un deuxième siège fortement refroidi.

Le refroidissement du siège peut se faire avec une double chambre (voir figure 4, références 25 et 26) pour avoir également un refroidissement de la bride 27 qui relie la vanne à des conduits situés côté amont, ou en variante, avec une seule chambre (voir figure 5, référence 23) pour avoir un volume limité d'eau de refroidissement. Quelque soit l'exécution choisie, il importe de remarquer qu'on est en présence d'un unique siège à refroidir. Le volume d'eau de refroidissement du corps, nécessité par heure, devient par conséquent moitié de celui des vannes classiques. Dans ces conditions, on peut facilement brancher le circuit de refroidissement du siège en série avec celui de l'opercule de la vanne.

Pour éviter des turbulences dans le vent chaud, qui passe à travers la vanne, et pour diminuer les pertes de charge, le diamètre 22 côté aval de la vanne est choisi légèrement plus grand que le diamètre 21 côté amont à l'entrée de celle-ci (voir figure 5). Cette caractéristique constructive permet des économies d'énergie et a en outre une influence favorable sur les pertes calorifiques à travers l'eau de refroidissement.

## Revendications

1. Vanne à vent chaud, pour installations qui alimentent des hauts fourneaux en vent chaud, comportant un corps de vanne (14) constitué par des tôles (18), un opercule (11), un chapeau de vanne (10) fixé sur le corps de vanne pour recevoir l'opercule (11) en position ouverte de la vanne, des sièges entre lesquels vient se loger l'opercule en position fermée, des canaux de refroidissement et des revêtements réfractaires (17) de protection côté vent chaud,
caractérisé en ce que le siège (24) contre lequel s'appuie l'opercule (11) de la vanne en position fermée, est en métal qui est en contact thermique avec un fluide de refroidissement et en ce que le côté opposé au dit siège (24) est constitué uniquement du matériau réfractaire (20).

2. Vanne selon la revendication 1, caractérisée en ce que les tôles de support (18) sont essentiellement situées à l'extérieur du corps de la vanne.

3. Vanne selon la revendication 2, caractérisée en ce que les tôles de support (18) sont munies en majeure partie d'un revêtement réfractaire épais (20).

4. Vanne selon les revendication 1 ou 3, caractérisée en ce que le revêtement réfractaire est du béton réfractaire, présentant une bonne isolation thermique.

5. Vanne selon la revendication 1, caractérisée en ce que le fluide de refroidissement circule dans une chambre (23, 25), sensiblement de révolution, dont le siège (24) constitue une partie de paroi.

6. Vanne selon la revendication 5, caractérisée en ce que ladite chambre (25) est adjacente à une deuxième chambre (26), sensiblement de révolution, dans laquelle circule un fluide de refroidissement et qui est en contact thermique evec une bride (27) qui relie l'un des côtés de la vanne à un conduit qui guide le vent chaud.

7. Vanne selon une des revendications 1 à 6, caractérisée en ce que sa section intérieur côté amont de l'opercule est inférieure à celle côté aval.

8. Vanne selon une des revendications 1 à 6, caractérisée en ce que le siège en métal (24) est amovible et remplaçable.

9. Vanne selon la revendication 1, caractérisée en ce que l'intérieur du corps de la vanne présente côté aval du béton réfractaire (20), aussi bien côté vent chaud que côté opercule (11), en ce que l'intérieur du corps de la vanne présente côté amont du béton réfractaire (20) ainsi qu'un siège en acier (24) refroidi à l'eau et revêtu côté vent chaud de béton réfractaire et en ce que l'extérieur du corps de la vanne présente de structures métalliques de support.

## Patentansprüche

1. Heißwindschieber, für Heißwindanlagen von Hochöfen, bestehend aus einem aus Blechen (18) gebildeten Schiebergehäuse (14), einer Schieberplatte (11), einer auf dem Schiebergehäuse befestigten Schieberhaube (10) die zum Aufnehmen der Schieberplatte (11) im geöffneten Zustand des Schiebers dient, Sitzen zwischen welchen die Schieberplatte sich im geschlossen Zustand befindet, Kühlkanälen und feuerfesten Schutzauskleidungen (17) zur Heißwindseite hin, dadurch gekennzeichnet, daß der Sitz (24) gegen welchen sich die Schieberplatte (11) im geschlossenen Zustand abstützt, aus Metall ist, welches in thermischen Kontakt zu einem Kühlmittel steht, und daß die dem genannten Sitz (24) gegenüberliegende Seite nur aus Feuerfestmaterial (20) besteht.

2. Schieber gemäß Anspruch 1, dadurch gekennzeichnet, daß die Stützbleche (18) sich im wesentlichen außerhalb des Schiebergehäuses befinden.

3. Schieber gemäß Anspruch 2, dadurch gekennzeichnet, daß die Stützbleche (18) größtenteils mit einer dicken Feuerfestschicht versehen sind (20).

4. Schieber gemäß einem der Ansprüche 1 oder 3, dadurch gekennzeichnet, daß die Feuerfestschicht aus Feuerfestbeton mit guter thermischer Isolierungswirkung besteht.

5. Schieber gemäß Anspruch 1, dadurch gekennzeichnet, daß das Kühlmittel in einer im wesentlichen ringförmigen Kammer (23,25) zirkuliert, deren Dichtungssitz (24) einen Teil der Wand darstellt.

6. Schieber gemäß Anspruch 5, dadurch gekennzeichnet, daß die genannte Kammer (25) an eine zweite im wesentlichen ringförmige Kammer (26) angrenzt, in welcher ein Kühlmittel zirkuliert und die in thermischen Kontakt mit einem Flansch (27) steht, welcher eine Seite des Schiebers mit einer Heißwind führenden Leitung verbindet.

7. Schieber gemäß einem der Ansprüche 1 bis 6, dadurch gekennzeichnet, daß der innere Schieberquerschnitt zur Seite des anströmenden Windes kleiner ist als zur Seite des abströmenden Windes.

8. Schieber gemäß einem der Ansprüche 1 bis 6, dadurch gekennzeichnet, daß der Dichtungssitz aus Metall (24) ausbaubar ist und ersetzt werden kann.

9. Schieber gemäß Anspruch 1, dadurch gekennzeichnet, daß das Innere des Schiebergehäuses zur abströmenden Seite des Windes hin Feuerfestbeton aufweist (20), sowohl zur Seite des Heißwindes wie auch zur Seite der Schieberplatte (11), daß das Innere des Schiebergehäuses auf der vom Wind angeströmten Seite Feuerfestbeton (20) aufweist sowie einen Dichtungssitz aus Stahl (24) der wassergekühlt ist und zur Heißwindseite hin mit Feuerfestbeton bekleidet ist, und daß das Äußere des Schiebergehäuses Verstärkungs-Strukturen aus Metall aufweist.

## Claims

1. A hot blast slide valve, for installations for supplying blast furnaces with hot blast, conprising a valve body (14) formed of steel plates (18), a valve member (11), a valve head (10) secured to the valve body for receiving the valve member (11) in the open position of the valve, seats between which the valve member is housed in the closed position, cooling channels and protective refractory coatings (17) on the hot blast side, characterised in that the seat (24) against which the valve member (11) of the valve abuts in the closed position is made of metal which is in thermal contact with a cooling fluid and in that the side opposite the said seat (24) only has refractory material (20).

2. A valve according to Claim 1, characterised in that the supporting plates (18) are substantially located on the outside of the valve body.

3. A valve according to Claim 2, characterised in that the supporting plates (18) are mostly provided with a thick refractory coating (20).

4. A valve according to Claims 1 or 3, characterised in that the refractory coating is refractory concrete having good thermal insulation properties.

5. A valve according to Claim 1, characterised in that the cooling fluid cirulates in a chamber (23, 25), substantially of rotation, whose seat (24) forms a portion of the wall.

6. A valve according to Claim 5, characterised in that the said chamber (25) is adjacent to a second chamber (26), substantially of rotation, in which a cooling fluid circulates and which is in thermal contact with a flange (27) connecting one of the sides of the valve to a duct carrying the hot blast.

7. A valve according to one of Claims 1 to 6, characterised in that its inner diameter on the upstream side of the valve member is less than that on the downstream side.

8. A valve according to one of Claims 1 to 6, characterised in that the metal seat (24) is detachable and replaceable,

9. A valve according to Claim 1, characterised in that the inside of the valve body has refractory concrete on the upstream side, both on the hot air side and on the valve member side (11), in that the inside of the valve body has refractory concrete (20) on the upstream side as well as a steel seat (24) cooled by water and coated on the hot air side with refractory concrete and in that the outside of the valve body has metal support structures.
